# EUROPEAN PATENT SPECIFICATION

(11) **EP 0 417 323 B1**
(45) Date of publication and mention of the grant of the patent: **16.03.1994**
(21) Application number: 90905641.8
(22) Date of filing: 31.03.1990
(51) Int. Cl.: A01C 7/16

(54) **ARTIFICIAL SEED SOWING MACHINE**
SÄHMASCHINE FÜR KUNSTSAAT
SEMOIR DE SEMIS ARTIFICIELS

(30) Priority: 04.04.1989 JP 85473/89; 06.12.1989 JP 316983/89
(43) Date of publication of application: 20.03.1991
(73) Proprietor: KIRIN BEER KABUSHIKI KAISHA, Shibuya-ku Tokyo 150 (JP)
(72) Inventor: SUZUKI, Akira Kirin Beer Kabushiki Kaisha, Tokyo 150 (JP); MATSUDA, Shoichi Kirin Beer Kabushiki Kaisha, Tokyo 150 (JP); KAWATA, Hironori Kirin Beer Kabushiki Kaisha, Tokyo 150 (JP); SAKAMOTO, Yuji Kirin Beer Kabushiki Kaisha, Tokyo 150 (JP); SUZUKI, Katsuhito, Kawasaki-shi Kanagawa 211 (JP)
(74) Representative: Riebling, Peter, Dr.-Ing.
(86) International application number: JP9000444
(87) International publication number: WO9011679

(56) References cited:
- JP-A- 6 170 908
- JP-U-63 127 310
- US-A- 4 072 251

## Description

### TECHNICAL FIELD

The present invention relates to an artificial seed sowing apparatus that sows substantially spherical capsules such as artificial seeds onto a seedling mat.

### BACKGROUND ART

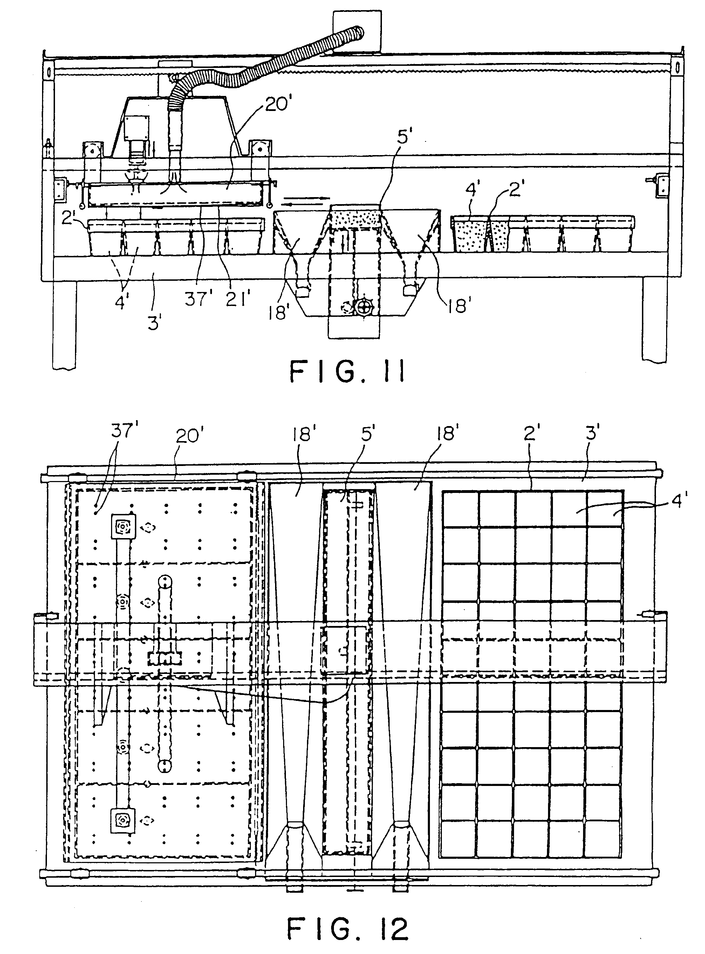

Conventional seed sowing apparatus have used apparatus such as that indicated in FIG. 11 and FIG. 12. More specifically, these seed sowing apparatus are provided with a seed box 5' with an open upper surface, in the center position of a horizontal platform 3' in which seedling boxes 2' can be spread, and towards the top of the horizontal platform 3' is provided a seed intake box 20' that moves sideways to the top of the seedling box 2'. The intake hole 37' formed in the bottom surface 21' of the seed intake box 20' causes seeds inside the seed box 5' to be attached by a suction blower and dropped in the centers of a grid 4' of seedling boxes 5', so that seeds falling from the seedling boxes 5' are recovered on a recovery hopper 18'.

However, in such a conventional seed sowing apparatus, when seeds are sown, the suction blower inside the suction hole formed in the bottom surface of the seed intake box strongly sucks the seeds and the seeds are allowed to fall by their own weight when the suction blower stops. Because of this, such an apparatus involves the problem of not being applicable to the sowing of artificial seeds as they are flexible substances such as gel capsules or substances which have extremely little resistance to cutting or friction, and are hence easily destroyed.

To overcome problems such as these the US-A-4072251 discloses an apparatus which is suitable for sowing artificial seeds of a spherical capsule shape having a hopper 18 suitable for the supply of artificial seeds to a dispersion plate 22 pierced at equal intervals by dispersion holes that are suitable to house many artificial seeds, a sowing plate 24 that is in close contact with the unterside of said dispersion plate 22 which is pierced by holes of the same number as the dispersion holes, and a displacement mechanism 56 to displace the dispersion plate 22 by a predetermined distance with respect to the sowing plate 24.

Also in this known apparatus the seed capsules become easily destroyed, because the hopper is adapted to contain a bulk volume of seed therein, and said seed being dispersed by a stationarily buffer structure of vertically disposed plates only. Due to the lack of further means for smooth dispersion of the seed, they easily get smashed.

It is the object of the present invention to provide an improved artificial seed sowing apparatus that uses the natural rolling action of the capsules themselves to enable the uniform and mass sowing of seeds without their destruction.

### DISCLOSURE OF INVENTION

The artificial seed sowing apparatus of the present invention having a supply hopper for the supply of artificial seeds to a dispersion plate, pierced at equal intervals by dispersion holes that house many artificial seeds; and a sowing plate that is in close contact with the underside of said dispersion plate which is pierced by holes of the same number as the dispersion holes, and a displacement mechanism to displace the dispersion plate by a predentermined distance with respect by a predetermined distance with respect to said sowing plate, characterized in that, in the dispersion plate being formed a plural number of parallel grooves along the holes in the direction of rolling of the artificial seeds; and a rocking mechanism is privided to rock said dispersion plate and sowing plate through a predetermined angle.

In an artificial seed sowing apparatus of the present invention and having the configuration as described above, capsules are supplied from the supply hopper to on the dispersion plate and the rocking apparatus is activated to rock the dispersion plate and the sowing plate so that the capsules roll along the grooves formed in the dispersion plate and enter the dispersion holed in the dispersion plate. After this, the dispersion plate is displaced and the capsules inside the dispersion holed of the dispersion plate are allowed to pass through the sowing holes in the sowing plate and to fall by their own weight into holes in the seedling mat disposed immediately beneath the sowing plate.

According to a prefered embodiment of the invention the sowing apparatus comprising a sweeper that operates in synchronization with the rocking of the rocking apparatus and that moves on the upper surface of the dispersion plate along the grooves of the dispersion plate. The sweeper is operated to sweep the capsules in a rearward direction and make them enter the dispersion holes in the dispersion plate.

### BRIEF DESCRIPTION OF DRAWINGS

FIG. 1 is a plan view of an artificial seed sowing apparatus according to a first embodiment of the present invention;
Fig. 2 is a sectional view of an artificial seed sowing apparatus according to a first embodiment of the present invention;

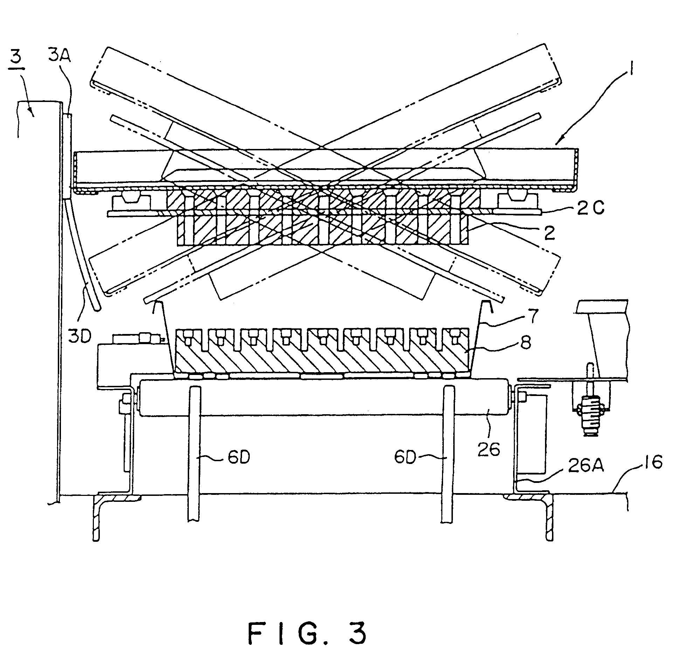

FIG. 3 is an enlarged sectional view of the rocking apparatus, taken along section line III-III of FIG. 1;
FIG. 4A and 4B are enlarged sectional views taken along section line IV-IV of FIG. 1, wherein

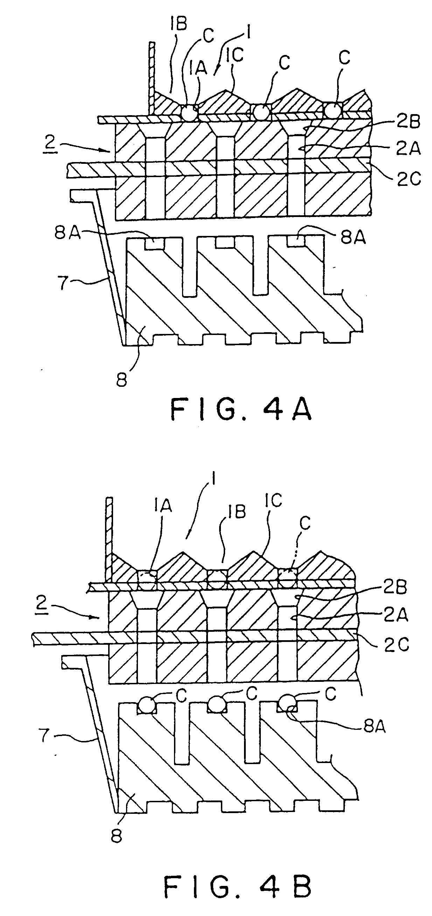

FIG. 4A is a view of the dispersion plate before rocking;
FIG. 4B is a detailed front view of the view of the dispersion plate after rocking;

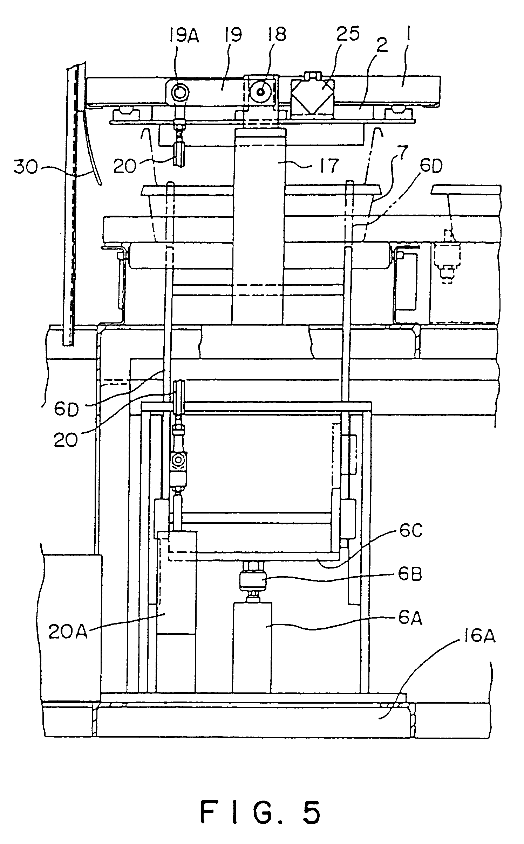

FIG. 5 is a detailed front elevational view of a rocking portion and a tray lift portion;

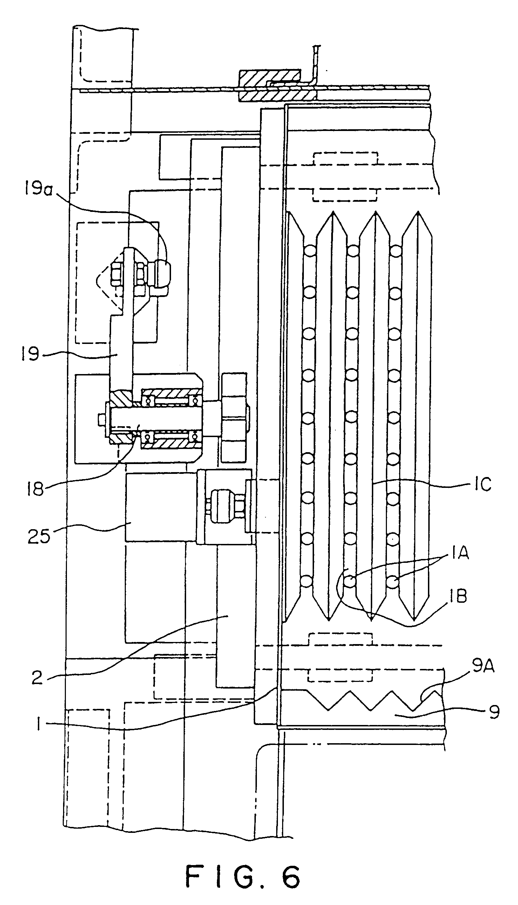

FIG. 6 is a plan view of a rocking portion;

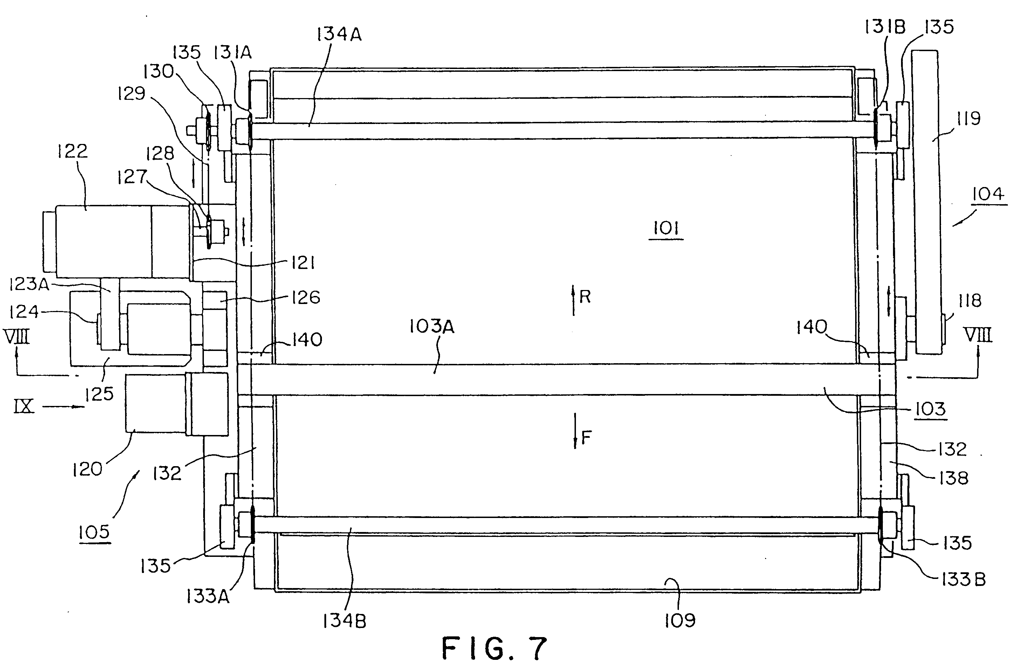

FIG. 7 is a plan view of the rocking portion of an artificial seed sowing apparatus provided with the sweeper of the second embodiment according to the present invention;

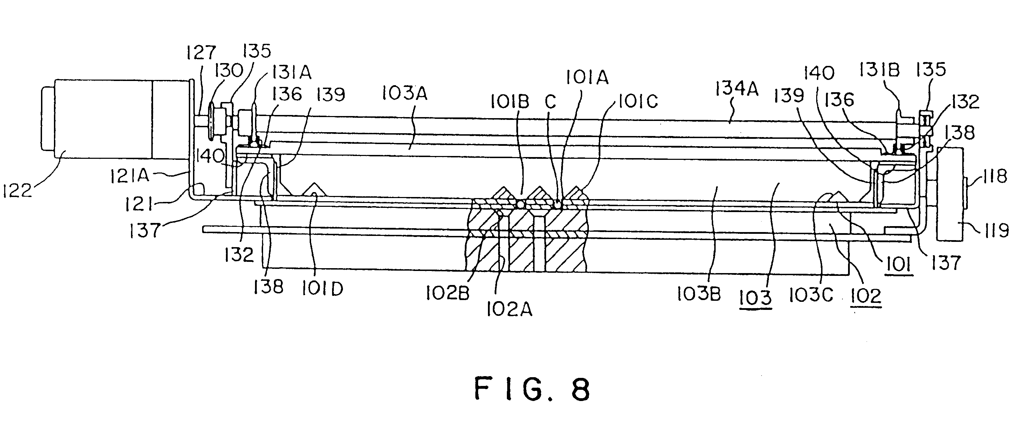

FIG. 8 is a sectional view of the rocking portion, taken along VIII-VIII of FIG. 7;

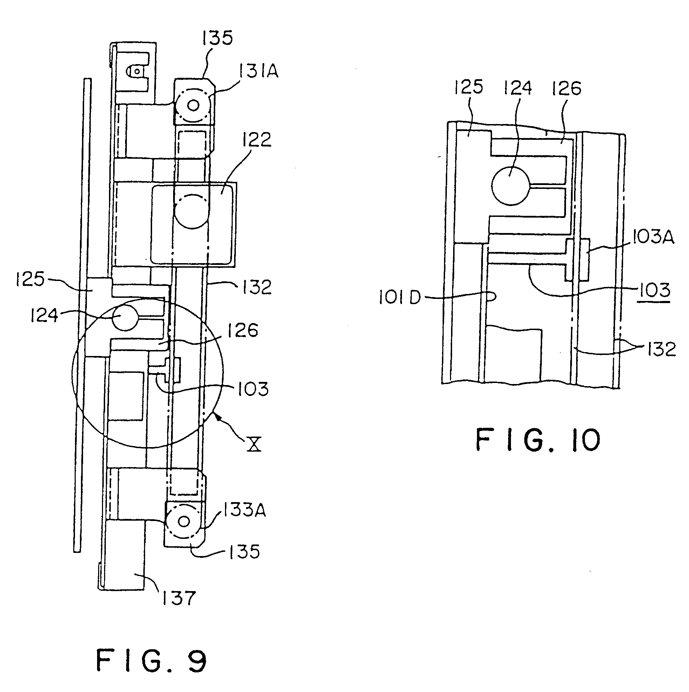

FIG. 9 is a side elevational view of the rocking portion, taken from the direction of the arrow IX in FIG. 7;
FIG. 10 is an enlarged view of the portion indicated by the arrow X in FIG. 9;
FIG. 11 is a plan view of a conventional seed sowing apparatus; and
FIG. 12 is a front elevational view of the conventional seed sowing apparatus of FIG. 11.

### BEST MODES FOR CARRYING OUT THE INVENTION

### § First embodiment

The following will describe a preferred first embodiment of the present invention, with reference to the appended drawings.

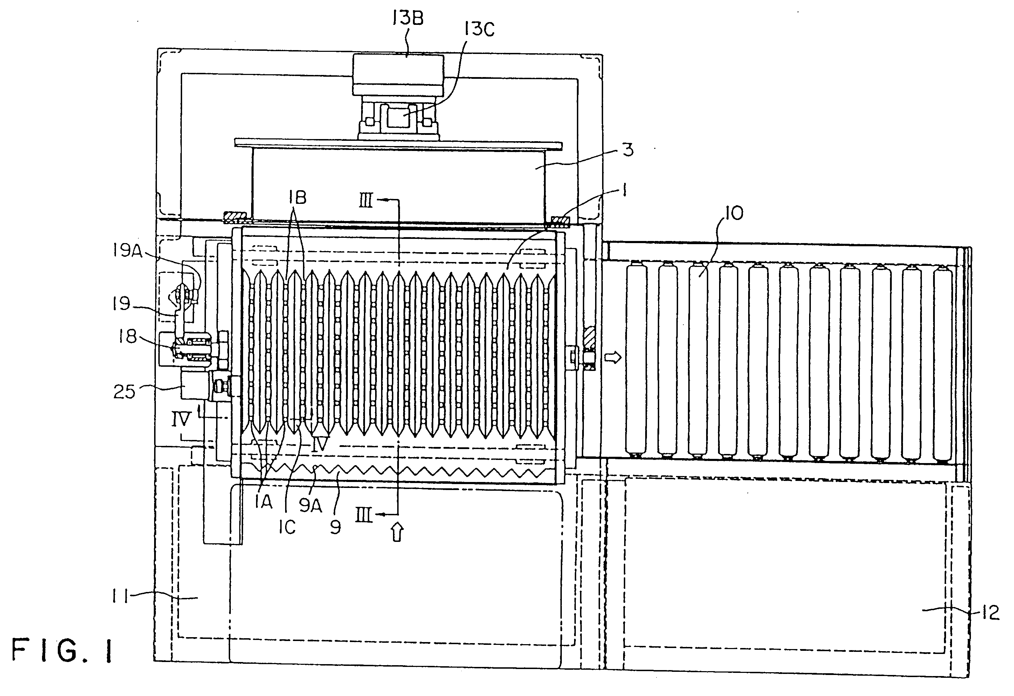

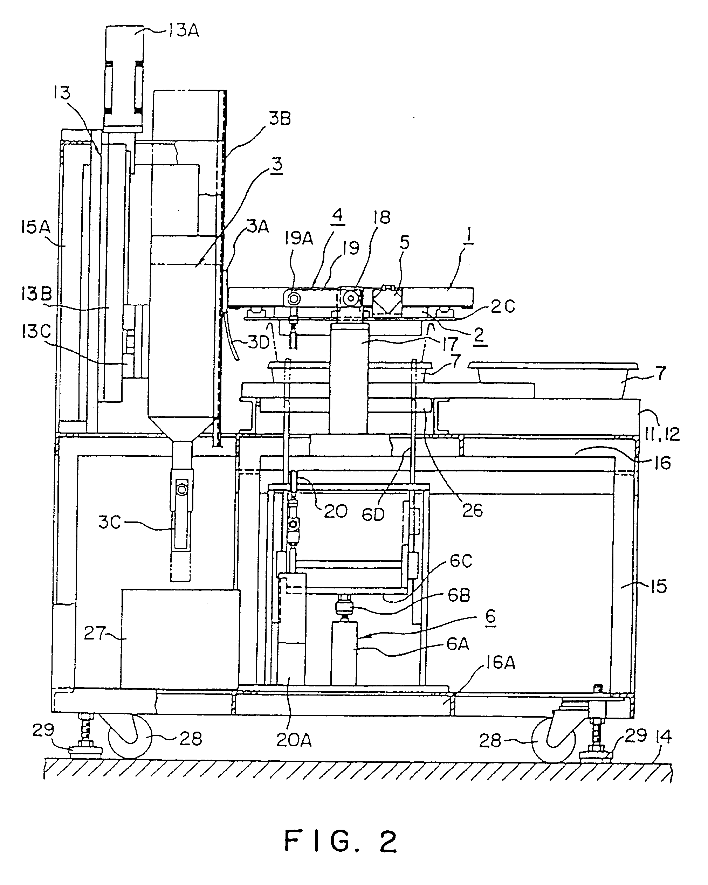

As shown in FIG. 1 and FIG. 2, an artificial seed (capsule) sowing apparatus according to the present invention, basically comprises a dispersion plate 1, a sowing plate 2, a supply hopper 3, a rocking apparatus 4 for the dispersion plate 1, a displacement apparatus 5, a tray lifter 6, a supply table 11 for the tray 7, and a free-roller conveyor 10 and a conveyor table 12 that take the trays 7 in the direction of the arrow as shown in FIG. 1, after sowing.

The dispersion plate 1 is pivotably mounted so as to be freely rockable, on a main shaft 18 to a pair of brackets provided upright on an upright of a frame 15 that is mounted on the floor 14, and a rocking arm 19 fixed to this main rocking shaft 18 is linked to a rocking cylinder 20A by a rocking rod 20 linked to this rocking arm 19 by a pin 19A. The dispersion plate 1 is flat in shape, and as shown in FIG. 4A and FIG. 4B, has many dispersion holes 1A piercing it at predetermined intervals in all directions. These dispersion holes 1A are of a size sufficient for artificial seeds C (spherical capsules with a diameter of 7.5mm ± 1mm, for example) to pass through. Furthermore, an upper surface of the dispersion plate 1 has formed in it many grooves 1B and inverted V-shaped ridges 1C parallel to lines perpendicular to the axis of the shaft of the main rocking axis 18, and along the dispersion holes 1A that pierce the dispersion plate 1 at equal intervals, and the capsules C are allowed to roll freely along these grooves 1B. In addition, at the end portion of the dispersion plate 1 is provided a stopper 9 that has many V-grooves 9A thereon, to form a pool portion for the capsules C.

Furthermore, under the dispersion plate 1 is provided a sowing plate 2 on a rocking plate mounting plate 2C, and which is configured so that the dispersion plate 1 is mounted on the sowing plate 2. This sowing plate 2 is pierced by separate sowing holes 2A having substantially the same diameter and pitch as the dispersion holes 1A that pierce the dispersion plate 1, and the entrance opening portion of these sowing holes 2A is bevelled to a taper shape 2B so as to facilitate the entrance of the capsules C. The dispersion plate 1 is displaced by a predetermined distance by the displacement cylinder 25 of the displacement apparatus 5 provided on the sowing plate mounting plate 2C, along the upper surface of the sowing plate 2 from the status shown in FIG. 4A to the status shown in FIG. 4B so that the sowing holes 2A and the dispersion holes 1A are brought into agreement. By this action, the capsules C pass through the sowing holes 2A and fall downwards.

In addition, under the sowing plate 2 is mounted a tray 7 (having dimensions of 10'' x 20'', for example) on a roller 26 which is pivotable mounted in a channel 26A fixed to the uprights 16 of the frame 15. The capsules in this tray C are housed in seedling mats for sowing, and the capsules C that fall through the sowing holes 2A of the sowing plate 2 pass through and are housed in the dispersion holes 1A and the holes 8A at equal intervals (such as 18 x 9 holes = 162 holes) in the seedling mats. These seedling mats 8 are water-absorbent mats comprising polyurethane, carbonized cork, polyphenol or the like. In addition, the end portions of a plural number of lift rods 6D protrude from the underside of the tray 7 from intervals between the rollers 26. When the lift cylinder 6A of the tray lifter 6 rises, the rising motion of the lift cylinder 6A reaches the lift rods 6D via the lift rod mounting plate 6C, to raise the tray 7 by a predetermined distance so that the falling and housing of the capsules C to the seedling mat 8 is facilitated.

Furthermore, adjacent to the start of the entrance of the dispersion plate 1 is provided a supply hopper 3. This supply hopper 3 has walls on three side and an opening portion in the side of the surface having the entrance, and the capsules C housed in the supply hopper 3 pass from this opening portion and through the opening portion of the guide plate 3A to be supplied to the entrance portion of the dispersion plate 1. It is also possible to provide a drainage screen inside the supply hopper 3 so that the capsules can be supplied directly from a water solution. Also, to the bottom of the guide plate 3A is provided a spill prevention plate 3D along the rocking path of the dispersion plate 1, to prevent the capsules from spilling. In addition, the supply hopper 3 is configured so that it can be moved up and down along a fixed plate 3B supported by the upright extensions 15 provided to the uprights 16. The drive of the supply hopper up-down drive mechanism 13 is performed by bowl screw portions 13B,13C that are rotatably driven at a fixed cycle by a supply hopper servo motor 13A provided to the upper portion of the uprights 15A. This up-down motion of the supply hopper 3 is controlled by a drive servo motor 13A using a computer, and so that the position of the opening portion of the supply hopper 3 is optimum for each time. When the supply hopper is moved upwards, the capsules C in the supply hopper 3 spill out from the opening portion of the guide plate 3A and roll in the direction of the dispersion plate 1, and the capsules C that are excessively supplied to the dispersion plate 1 roll back after striking the stopper 9 to be described later, to fill dispersion holes 1A that are not yet filled and be recovered when the supply hopper 3 lowers again. In addition, to the bottom end potion of the supply hopper 3 is mounted a valve 3C which opens to allow the capsules C in the supply hopper 3 to be recovered to inside a receptacle 27 mounted to the lower uprights 16A of the frame 15. The artificial seed sowing apparatus of the present embodiment and according to the present invention can be freely moved by wheels 28 mounted so as to be freely rotatable via a bracket to the lower upright 16A of the frame 15, and can be fixed in a predetermined position by adjustable legs 29. When extremely viscous capsules are being sown, it is also possible to use auxiliary energy such as an air jet or the like to supply the capsules from the supply hopper 3 to the dispersion plate 1.

In the artificial seed sowing apparatus of the present invention, capsules C are first housed in the supply hopper 3 and the supply hopper up-down movement mechanism 13 driven to move the supply hopper 3 so that the opening portion of the supply hopper 3 is in optimum agreement with the entrance portion of the dispersion plate 1 so that capsules C are supplied to the upper surface of the dispersion plate 1. After the capsules C have been supplied to the dispersion plate 1, the rocking apparatus 4 is activated so that the dispersion plate 1 is rocked backwards and forwards around the axis of the main shaft 18 through an angle of 25°, for example and so that the capsules C inside the grooves 1B of the dispersion plate 1 roll naturally along these grooves 1B and eventually enter the dispersion holes 1A of the dispersion plate 1. Then, the capsules C that are stopped by the stopper 9 are returned in the opposite direction when the dispersion plate 1 is rocked the other way so that the capsules roll back along the grooves 1B and fill any dispersion holes 1A that have not yet been filled. Because of this, the capsules C are housed in all of the dispersion holes 1A without there being two or more capsules in any one hole. After a tray 7 housing a seedling mats 8 from a supply table 11 of the frame 15 is set to a required supply position immediately beneath the rocking plate 2, the tray lift mechanism 6 is operated and the lift rods 6D protrude to raise the tray 7 by a required amount. After this, the displacement cylinder 25 of the displacement apparatus 5 is operated and the dispersion plate 1 is displaced with respect to the sowing plate 2 and as indicated in FIG. 4B, the dispersion holes 1A of the dispersion plate 1 and the sowing holes 2A of the sowing plate 2 are brought into agreement. By this, the capsules C that are inside the dispersion holes 1A pass through the sowing holes 2A of the sowing plate 2 and simultaneously fall into the holes in the seedling mat 8 and are sown. After this, seedling mats 8 that have been sown are conveyed tray by tray by the free-roller conveyor 10 by an electric roller conveyor or the like, in the direction indicated by the arrow, and conveyed to the discharge table 12. In this manner, it is possible to automate or semi-automate the supply and discharge of the trays 7.

The first embodiment of the present invention is configured as has been described above and since the natural rolling action of the capsules themselves is used, there is no damage to capsules made of flexible substances such as gel or substances which have extremely little resistance to cutting or friction, and are hence easily destroyed. In addition, a plural number of grooves are formed parallel to the plural number of rows of dispersion holes provided in the dispersion plate and the dispersion plate is rocked through a predetermined angle so that it is possible for the capsules to enter all of the dispersion holes of the dispersion plate and then, when the dispersion plate is displaced by a predetermined amount to make the positions of the dispersion holes of the dispersion plate and the sowing holes of the sowing plate agree, the capsules fall at the same time to allow a large amount of capsules to be sown on the mat and therefore realize a significant labor saving and thus a large increase in the productivity. Furthermore, the position of the opening portion of the supply hopper and opposite the entrance to the dispersion plate, is adjusted and controlled by the drive of a servo motor under computer control and so there is the significant effect of there being extremely smooth supply of the capsules from the supply hopper and the recovery of capsules supplied excessively from the dispersion plate.

### § Second embodiment

The following is a description of a second embodiment of the artificial seed sowing apparatus according to the present invention, with reference to FIG. 7 through FIG. 9. FIG. 7 is a plan view of the rocking portion of an artificial seed sowing apparatus provided with the sweeper of the second embodiment according to the present invention, FIG. 8 is a sectional view of the rocking portion, taken along VIII-VIII of FIG. 7, FIG. 9 is a side elevational view of the rocking portion, taken from the direction of the arrow IX in FIG. 7, and FIG. 10 is an enlarged view of the portion indicated by the arrow X in FIG. 9. As shown in FIG. 7 through FIG. 9, the artificial seed sowing apparatus according to the present invention comprises a dispersion plate 101, a sowing plate 102, a sweeper 103, a rocker mechanism 104 and a sweeper mechanism 105, and in the same manner as for the artificial seed sowing apparatus according to the first embodiment, also has a tray lift mechanism upon which seedling mats are placed, a tray supply table, and a free-roller conveyor and discharge table to discharge the trays after they have been sown.

The dispersion plate 101 is pivotably mounted so as to be freely rockable, on a main shaft 118 to a pair of brackets provided upright on an upright of a frame that is mounted on the floor, and a rocking arm 119 fixed to this main rocking shaft 118 is linked to a rocking cylinder by a rocking rod linked to this rocking arm 119. The dispersion plate 101 is flat in shape, and as shown in FIG. 8, has many dispersion holes 101A piercing it at a predetermined interval (such as 1'', for example) in all directions. These dispersion holes 101A are of a size sufficient for artificial seeds C (spherical capsules with a diameter of 7.5mm ± 1mm, for example) to pass through. Furthermore, an upper surface of the dispersion plate 101 has formed in it many grooves 101B and inverted V-shaped ridges 101C of silicon rubber or the like and parallel to lines perpendicular to the axis of the shaft of the main rocking axis 118, and along the dispersion holes 101A that pierce the dispersion plate 101 at equal intervals, and the capsules C are allowed to roll freely along these grooves 101B. In addition, at the end portion of the dispersion plate 101 is provided a stopper 109 that has many V-grooves 9A thereon, to form a pool portion for the capsules C.

Furthermore, under the dispersion plate 101 is provided with a sowing plate 102, and is configured so that the dispersion plate 101 is mounted on the sowing plate 102. This sowing plate 102 is pierced by separate sowing holes 102A having substantially the same diameter and pitch as the dispersion holes 101A that pierce the dispersion plate 101, and the entrance opening portion of these sowing holes 102A is bevelled to a taper shape 102B so as to facilitate the entrance of the capsules C. The dispersion plate 101 is displaced by a predetermined distance by the displacement cylinder 120 and along the upper surface of the sowing plate 2 so that the sowing holes 102A and the dispersion holes 101A are brought into agreement. By this action, the capsules C pass through the sowing holes 102A and fall downwards and are sown in seedling mats (not indicated in the figure).

In the artificial seed sowing apparatus according to a second embodiment of the present invention, there is also a sweeper 103 provided on an upper surface of the dispersion plate 101 and the sweeper 103 is moved so as to reciprocate along the V-shaped grooves 101B and the bottom surface 101D of the dispersion plate 101, in synchronization with the forward and backward rocking motion caused by the rocking mechanism 104 of the dispersion plate 101. More specifically, in order to perform speed motion in this manner, there are provided a forward-reverse motor 122 to a vertical wall 121A of a bracket 121 which is L-shaped in section and fixed to one end of the dispersion plate 101, with the output shaft 127 of the motor being pivotably attached to the sprocket wheel 128. In addition, to the outer casing of the drive motor 122 is fixed an arm 123A and the brackets 125,126 fixed to the other end of the dispersion plate 101 are pivotably supported by a pin 124 supported by brackets 125,126, so as to be freely displaceable in the direction of the shaft. Furthermore, both ends of the dispersion plate 101 are provided with L-shaped steel members 137, the four corners of which have upright brackets 135 supporting support axes 134A, 134B. One end of the support shaft 134A pivotably supported by the four brackets 135 has fixed to it a separate sprocket flywheel linked with a sprocket flywheel 128 via a roller chain, and another sprocket flywheel 131A, and to the other end of this support shaft 134 is fixed another sprocket flywheel.

In addition, to both ends of the other support shaft 134B are fixed sprocket flywheels 133A,133B, and the rotation of the support shaft 134A is transmitted to the support shaft 134B by the roller chain around the sprocket wheels 131,133. Furthermore, the roller chain 132 around the sprocket wheels 131A,133A, and 131B,133B have a sweeper means 103 which is T-shaped in section, fixed to it by means of bolts or the like so that it hangs vertically, as indicated in FIG. 10.

This sweeper means 103 comprises a flexible sweeper support portion 103A fixed by bolts or the like via a mounting fitting 136 to the roller chain 132, and a sweeper portion 103B forming a unit with the sweeper support portion 103A, and of a flexible material such as nylon, animal or brush hair, or silicon rubber. The sweeper portion 103B has many V-grooves 103C that fit into the grooves 101B and the ridges 101C on the surface 101A of the dispersion plate 101, to sweep the capsules C of artificial seeds, along the grooves 101B. In addition, the underside of both ends of the sweeper support portion 103A have seals 140 that contact the upper surface of the guides that are L-shape in section and which are provided on the side surfaces of the partition walls 139 of the dispersion plate 101 when the sweeper moves back and forth.

The following is a description of the operation of an artificial seed sowing apparatus according to a second embodiment of the present invention and having the configuration as described above.

First, capsules C are housed in the supply hopper H and trays housing seedling mats 8 are placed immediately beneath the sowing plate 102 and the dispersion plate 101 and capsules C are supplied from the supply hopper 3 to the top surface of the dispersion plate 101. After the capsules C have been supplied to the dispersion plate 101, the rocking apparatus 104 is activated so that the dispersion plate 101 is rocked backwards and forwards around the axis of the main shaft 118 through an angle of 15°, for example, and so that the capsules C inside the grooves 101B of the dispersion plate 101 roll naturally along these grooves 101B and eventually enter the dispersion holes 101A of the dispersion plate 101.

However, the capsules C are highly viscous artificial seeds and do not roll easily. Because of this, in the present invention rotates a forward-reverse drive motor 122 in synchronization with the forward motion of the dispersion plate 101, in the forward direction so as to move a sweeper 103 along guide plates 138 and in the direction of the arrow F of FIG. 7. By this action, the capsules C that are in the grooves 101B in the surface of the dispersion plate 101 have a force applied to them so as to sweep them from behind and in the direction of the stopper 109 so that they fill all of the dispersion holes 101A in the dispersion plate 101.

Then, the rocker mechanism 104 is operated by an air cylinder or the like so that the dispersion plate 101 is rocked backwards and capsules C that have been stopped by the stopper 109 are sent in the reverse direction towards the rear of the dispersion plate 101 and roll along the grooves 101B to enter any dispersion holes 101A that still do not have a capsule in them. Because of this action, the capsules C are housed in all of the dispersion holes 101A without there being two or more capsules in any one dispersion hole. When this is done, the forward-reverse motor is rotated in reverse in synchronization with the rear-moving action of the dispersion plate 101 and the sweeper 103 is moved in the direction shown by the arrow R in FIG. 7. By this action, the capsules C have a force applied so as to sweep them from the rear, and the capsules C enter any of the dispersion holes 101A that are still not filled with artificial seeds.

The dispersion plate 101 and the sowing plate 102 are rocked by the rocker mechanism 104 to be returned to the horizontal position and the drive motor 122 is again driven forward so that the sweeper 103 returns to the side of the stopper 122 (the direction of the arrow F), and then the drive motor 122 is driven in reverse. By this, the sweeper 103 returns again in the direction of the arrow R of FIG. 7 and excess capsules supplied to the dispersion plate 101 are removed from the dispersion plate 101.

Furthermore, the tray lift mechanism (refer to FIG. 5) is operated and the tray is raised to a predetermined position. After this, the displacement cylinder 120 is operated to displace the dispersion plate 101 with respect to the sowing plate 102 and bring the sowing holes 102A and the dispersion holes 101A into agreement. By this action, the capsules C inside the dispersion holes 101A pass through the sowing holes 102A in the sowing plate 102 and fall downwards into the holes 8A in the seedling mat 8 so that many capsules C can be sown in the seedling mat at the same time. After this, a tray of seedling mats that have been sown are conveyed on a free-roller conveyor by an electric roller conveyor or the like and discharged to a discharge table.

An artificial seed sowing apparatus according to the second embodiment of the present invention is configured as has been described above and so when artificial seeds of spherical capsules of flexible gel or the like and which are extremely weak with respect to cutting and friction forces are sown to a seedling mat, the combined effect of the natural rolling action of the capsules themselves and the sweeping action of the sweeper enable the capsules to be sown easily and in large amounts to a seedling mat and without any damage to the capsules. In addition, a plural number of grooves are formed parallel to the plural number of rows of dispersion holes provided in the dispersion plate and the sweeper rocks the dispersion plate as it is rocked through a predetermined angle so that it is possible for the capsules to enter all of the dispersion holes of the dispersion plate, and then, when the dispersion plate is displaced by a predetermined amount to make the positions of the dispersion holes of the dispersion plate and the sowing holes of the sowing plate agree, the capsules fall at the same time to allow a large amount of capsules to be sown on the mat and therefore realize a significant labor saving and a thus a large increase in the productivity. Furthermore, there is also the significant effect of there being extremely smooth supply of the capsules from the supply hopper and the recovery of capsules supplied excessively from the dispersion plate.

### INDUSTRIAL APPLICABILITY

The artificial seed sowing apparatus of the present invention is applicable to the mass, uniform and quick sowing on a seedling mat of substantially spherical artificial seeds of substances such as gel which is weak with respect to cutting and frictional forces, and without the destruction of such.

## Claims

1. An apparatus for sowing artificial seeds of a spherical capsule shape, and having a supply hopper (3) for the supply of artificial seeds (C) to a dispersion plate (1;101), pierced at equal intervals by dispersion holes (1A;101A) that house many artificial seeds (C); and a sowing plate (2;102) that is in close contact with the underside of said dispersion plate (1;101) which is pierced by holes (2A;102A) of the same number as the dispersion holes (1A;101A), and a displacement mechanism (5;105) to displace the dispersion plate (1;101) by a predetermined distance with respect to said sowing (2;102) plate, **characterized** in that, in the dispersion plate (1;101) being formed a plural number of parallel grooves (1B;101B) along the holes (1A;101A) in the direction of rolling of the artificial seeds; and a rocking mechanism (4,104) is provided to rock said dispersion plate (1;101) and sowing plate (2;102) through a predetermined angle.

2. Sowing apparatus to according to claim 1, **characterized** in that, a sweeper (103) that operates in synchronization with the rocking of said rocking mechanism (4;104) on an upper surface of said dispersion plate (1;101) and which moves along said grooves (1B;101B).

## Patentansprüche

1. Eine Vorrichtung zum Säen von Kunstsaaten einer kugelförmigen, kapselartigen Form, welche einen Zufuhrtrichter (3) für die Zufuhr der Kunstsaaten (C) zu einer Streuplatte (1,101,) aufweist, welche in gleichmäßigen Abständen von streulöchern (1a,101a) unterbrochen ist, in welchen viele Kunstsaaten (C) enthalten sind; und einer Säplatte (2,102), welche in engem Kontakt mit der Unterseite der Streuplatte (1,101) steht und welche durch die gleiche Anzahl von Löchern (2a,102a) unterbrochen ist, wie die Streuplatte (1a,101a), und einem Trennmechanismus (5, 105), um die Streuplatte (1,101) bezüglich der Säplatte (2,102), um eine vorbestimmte Distanz zu versetzen, **dadurch**
**gekennzeichnet** , daß in der Streuplatte (1,101) eine Mehrzahl von parallelen Rillen (1b,101b) entlang den Löchern (1a,101a) in Richtung der Rollbewegung der Kunstsaaten ausgebildet sind, und ein Schaukelmechanismus (4,104) vorgesehen ist, um die Streuplatte (1,101) und die Säplatte (2,102) in einem vorbestimmten Winkel schaukelt.

2. Sävorrichtung nach Anspruch 1,
**dadurch gekennzeichnet**, daß ein Kehrschieber (103) vorgesehen ist, welcher synchron zum Schaukeln des Schaukelmechanismus auf der oberen Fläche der Streuplatte (1,101) arbeitet und sich entlang der Rillen (1b,101b) bewegt.

## Revendications

1. Appareil pour semer des graines artificielles en forme de capsule sphérique, comprenant une trémie d'alimentation (3) servant à délivrer des graines artificielles (C) à une plaque de dispersion (1 ; 101) percée à intervalles égaux de trous de dispersion (1A ; 101A) qui logent de nombreuses graines artificielles (C) ; et une plaque d'ensemencement (2 ; 102) qui est en contact étroit avec la face inférieure de ladite plaque de dispersion (1 ; 101), qui est percée de trous (2A ; 102A) en nombre égal à celui des trous de dispersion (1A ; 101A), et un mécanisme de déplacement (5 ; 105) servant à déplacer la plaque de dispersion (1 ; 101) d'une distance prédéterminée par rapport à ladite plaque d'ensemencement (2 ; 102), caractérisé en ce que dans la plaque de dispersion (1 ; 101), une pluralité de rainures parallèles (1B ; 101B) sont formées le long des trous (1A ; 101A) dans la direction du roulement des graines artificielles ; et un mécanisme de basculement (4 ; 104) est prévu pour faire basculer ladite plaque de dispersion (1 ; 101) et ladite plaque d'ensemencement (2 ; 102) d'un angle prédéterminé.

2. Appareil pour semer selon la revendication 1, caractérisé en ce qu'elle comprend un racleur (103) qui opère en synchronisme avec le basculement dudit mécanisme de basculement (4 ; 104), sur une surface supérieure de ladite plaque de dispersion (1 ; 101) et qui se déplace le long desdites rainures (1B ; 101B).
